# EUROPEAN PATENT SPECIFICATION

(11) **EP 2 876 570 B1**
(45) Date of publication and mention of the grant of the patent: **01.01.2020**
(21) Application number: 14189809.8
(22) Date of filing: 21.10.2014
(51) Int. Cl.: G06F 21/34, G08B 13/196, H04L 29/06, H04N 7/18

(54) **SYSTEM AND METHOD OF DYNAMIC CORRELATION VIEW FOR CLOUD BASED INCIDENT ANALYSIS AND PATTERN DETECTION**
SYSTEM UND VERFAHREN ZUR DYNAMISCHEN KORRELATIONSANSICHT CLOUD-BASIERTER VORFALLSANALYSE UND MUSTERERKENNUNG
SYSTÈME ET PROCÉDÉ DE VISUALISATION DE CORRÉLATION DYNAMIQUE POUR ANALYSE D'INCIDENTS EN NUAGE ET DÉTECTION DE MOTIF

(30) Priority: 20.11.2013 US 201314085247
(43) Date of publication of application: 27.05.2015
(73) Proprietor: Honeywell International Inc., Morris Plains, NJ 07950 (US)
(72) Inventor: Salgar, Mayur, Morristown, NJ New Jersey 07962-2245 (US); Subbian, Deepakumar, Morristown, NJ New Jersey 07962-2245 (US); Meganathan, Deepak Sundar, Morristown, NJ New Jersey 07962-2245 (US)
(74) Representative: Houghton, Mark Phillip

(56) References cited:
- WO-A1-01/13637
- WO-A1-2012/151651
- US-A1- 2004 117 638
- US-A1- 2006 221 184
- US-A1- 2011 261 202
- US-A1- 2013 166 711
- Cloudview: "Cloudview Overview", , 14 November 2013 (2013-11-14), XP054975803, Retrieved from the Internet: URL:https://www.youtube.com/watch?v=mymQV_ K7rro [retrieved on 2015-03-25]
- Anonymous: "Cloudview", http://www.cloudview.co/, 4 April 2013 (2013-04-04), page 698071, XP055179217, Retrieved from the Internet: URL:https://web.archive.org/web/2013040408 1938/http://cloudview.co/ [retrieved on 2015-03-25]

## Description

### FIELD

The field relates to surveillance systems and more particularly to the detection of incidents recorded by the surveillance system.

### BACKGROUND

Surveillance systems are generally known. Such systems are typically based upon the use of one or more closed circuit television (CCTV) cameras.

In some cases, the CCTV cameras are connected to one or more displays monitored by security guards. The guards monitor the displays on a continuous basis to detect events within a secured area. Alternatively or in addition, images from each CCTV camera may be recorded for later review in the event of an incident.

In newer systems, the CCTV cameras may be equipped with motion detection. In this case, an audible alarm may be activated to alert the guard in response to the detection of motion. This may be especially useful where the secured area is very large and the guard is required to monitor a large number of cameras.

In addition to the detection of motion, many security systems are also provided with door and window switches that also operate to alert a guard to intruders. This may be useful in areas that contain one or more authorized employees who work within the secured area.

While CCTV surveillance systems work well, it is often difficult to identify video of events which do not directly trigger alarms. Accordingly, a need exists for better methods of identifying events.

Cloudview: "Cloudview Overview", 14 November 2013 (2013-11 - 14), XP054975803, URL:https://www.youtube.com/watch?v=mymQV K7rro is a video providing an illustrative overview of a cloud-based system, CloudView, enabling users to view, manage and share video captured by CCTV cameras. Patent document US2006221184 A1 is related to a system that presents video data in a format that allows a user to quickly scan or survey video data captured by a multi-camera surveillance system.

### SUMMARY

The present invention provides a method according to claim 1 of the appended claims.

The invention further provides an apparatus according to claim 8 of the appended claims.

### BRIEF DESCRIPTION OF THE DRAWINGS

FIG. 1 is a block diagram of a security system shown generally in accordance with an illustrated embodiment;
FIG. 2 depicts a search function used by the system of FIG. 1;
FIG. 3 depicts a screen of FIG. 2;
FIG. 4 shows an expanded screen of search functions that may be displayed by the system of FIG. 1;
FIG. 5 shows a further expanded screen that may be displayed by the system of FIG. 1;
FIG. 6 shows a further expanded screen that may be displayed by the system of FIG. 1;
FIG. 7 shows an expanded screen with additional search functions that may be displayed by the system of FIG. 1; and
FIG. 8 depicts information flow within the system of FIG. 1.

### DETAILED DESCRIPTION OF AN ILLUSTRATED EMBODIMENT

While embodiments can take many different forms, specific embodiments thereof are shown in the drawings and will be described herein in detail with the understanding that the present disclosure is to be considered as an exemplification of the principles hereof, as well as the best mode of practicing same. No limitation to the specific embodiment illustrated is intended.

In general, CCTV systems may be integrated with access control systems and intrusion detection systems. In prior system, it has been difficult to correlate events among the logical entities of such systems. Some of the entities among which such correlation is important include cameras, access doors, POS operators, POS data, alarm/events, CCTV operators, etc.

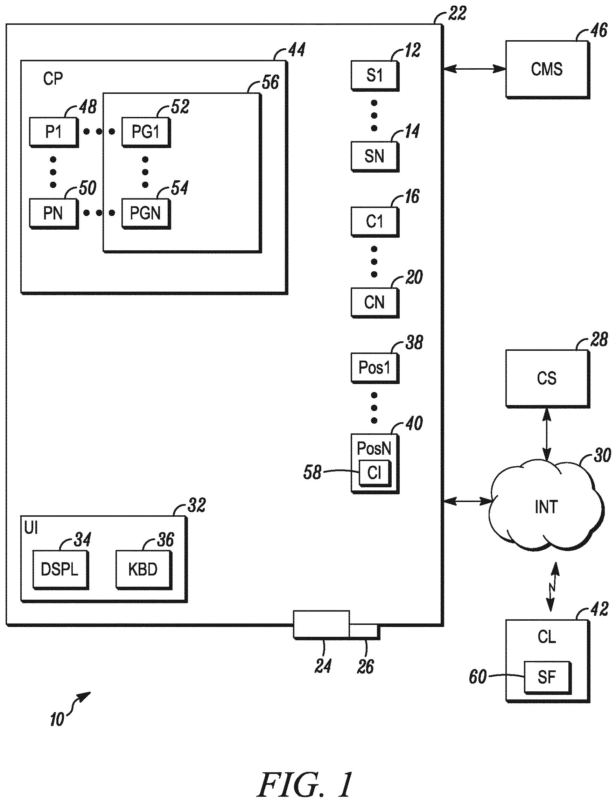

FIG. 1 is a block diagram of a security system 10 shown generally in accordance with an illustrated embodiment. Included within the system may be a number of sensors 12, 14 that detect events such as security threats within a secured area 22. The sensors may be based upon any of a number of different sensing objectives. For example, the sensors may include one or more limit switches intended to detect intruders within the secured area. Alternatively, the sensors may include environmental sensors intended to detect environmental threats (e.g., smoke, natural gas, carbon monoxide, etc.).

The secured area may also include one or more access doors 24 and associated locking device. A card reader 26 may be located proximate the access door. Authorized persons may slide an access card through the card reader. In response, the card reader activates the locking device and opens the door thereby allowing access by authorized persons into and out of the secured area.

A number of cameras 16, 20 may also be located within and around the secured area. The cameras may be part of a surveillance system that presents images of a field of each camera on a user interface 32 of a security guard.

The user interface may include a display 34 that shows images from the cameras. A keyboard 36 allows the guard to enter commands for camera selection or other control of the security system.

At least some of the cameras may be Internet cameras that save images from the cameras into a cloud memory device such as a cloud server 28 through the Internet 30. Some of the cameras may also contain circuitry that detects motion within a field of view of the camera.

A wireless device 42 of an authorized user may be provided that includes provisions to access and control the security system. The wireless device may also download and display images saved into the cloud device.

The secured area may also include one or more point of sale (POS) devices 38. The POS devices may each contain a separate user interface that receives details of a transaction from an operator of the POS device.

The sensors, cameras and POS devices may be monitored via a local control panel 44. Upon detecting an intruder or other threat, the control panel may send an alarm message to a central monitoring station 46. The central monitoring station may respond by summoning the appropriate help (e.g., police, fire department, etc.).

Each of the devices discussed above includes circuitry that provides the functionality discussed herein. The circuitry of each device may include one or more processor apparatus (processors) 48, 50, each operating under control of one or more computer programs 52, 54 loaded from a non-transitory computer readable medium (memory 56). As used herein, reference to a step performed by a computer program is also reference to the processor that executed that step.

Within the security system, an alarm processor may monitor the sensors, the cameras and card readers. The alarm processor may also monitor the POS devices for tampering. Activation of door sensor or motion detection or tampering may be detected and the alarm processor may compose and send an alarm message to the central monitoring station.

Similarly, an access processor may monitor the card reader. The access processor may compare an identifier of a card swiped through the card reader with a list of authorized users within memory who are to be admitted into the secured area. Upon detecting a match, the access processor may activate the locking device opening the door.

The access processor may also retrieve an image of the authorized user and display that image on the display of the user interface for the benefit of a guard. In addition, the access processor may also retrieve an image from a camera monitoring the door and present the image on the user interface. This allows a guard to compare the authorized user of the card with an image of the person entering through the door.

A transaction processor may also monitor the POS devices. In this regard, the transaction processor may record each transaction and save the details into a transaction file within a memory device associated with each POS device. The transaction processor may also display details of the transaction on the user interface of a guard station or other authorized person along with video from a camera whose field of view includes the POS device.

Under the illustrated embodiment, the sensors, cameras, POS devices and card readers may each have a cloud interface 58 that saves events detected within the secured area into a respective file of the cloud server along with details of the event. The saved information may include an identifier of a device or person monitored by the security system, an identifier of the monitoring function that triggered the saving of the event into the cloud file and a time of the event. In the case of a card reader, the event would include an identifier of the card reader, an identifier of a triggering event (i.e., the detection of a card), an identifier of the monitoring function of monitoring access into the secured area through a particular door, a time that the card was read and an identifier of the card read. The details of the event may also include a video image of the authorized user of the card read and whether access by the person carrying the card was granted or denied.

In the case of a camera, the event would include an identifier of the camera, an identifier of the monitoring function of monitoring access in a particular portion of the secured area, one or more video frames from the camera and an indicator of what caused the video to be recorded (e.g., the detection of motion, activation of a nearby door sensor, etc.). In the case of a camera near a POS terminal, the monitoring function may be monitoring the POS terminal and the triggering event may be detection of a transaction from the POS terminal.

In the case of a POS terminal, the trigger for saving events into the cloud file may be the transaction itself. The event details are the details of the transaction. Details may include the monitoring function of monitoring transactions through a particular POS device, a subject matter of the transaction (e.g., a sale, voided transaction, canceled transaction, returned goods, etc.).

In the case of a sensor, the event may be the opening of a door along a periphery of the secured area. Information saved to a cloud file may include the monitoring function of monitoring access through a particular door, an identifier of the sensor and a time. Alternatively, an image may also be saved. The image saved may be from a camera that covers the door.

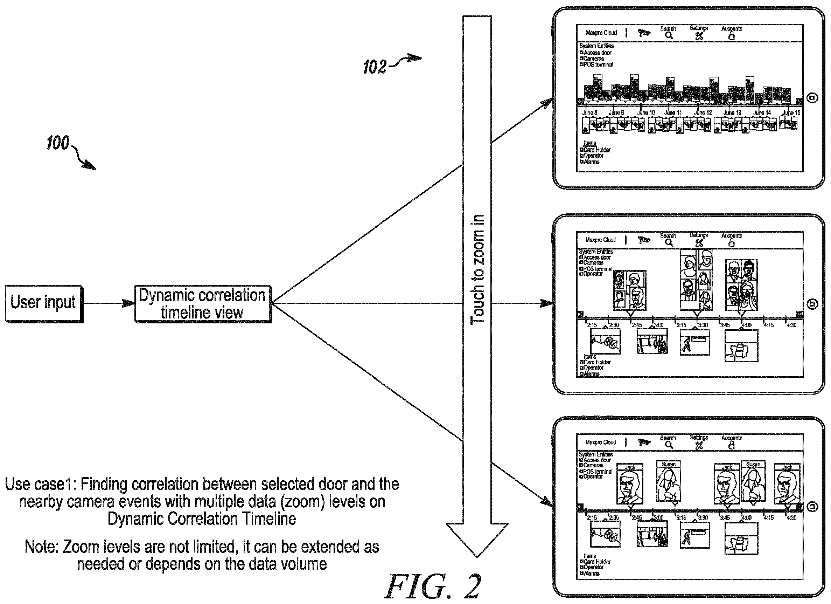

Under one illustrated embodiment, the system includes a search function device 60 executing on one or more processors of a portable user device that correlates images to a timeline based upon user input. FIG. 2 depicts one example of the process 100 associated with use of the device. As shown in FIG. 2, the user may activate the search function and the search function creates a time line on a screen 102 between a beginning time and ending time. The timeline includes a first area above the time line for the display of events of a first type and a second area below the time line for the display of events of a second type.

In this example, the user of the portable device may enter a set of search parameters through the user interface of the portable device. The search parameters entered by the user may include a start and end time of the time line. The search parameters may also include a system entity and at least one respective identifier for each of the two types of events (monitoring functions) to be displayed in conjunction with the timeline. The system entity may be defined by an identifier of the monitored device or person. A correlation processor of the search function dynamically correlates events of the two types to the time line.

The search function may include a monitoring options file 62, 64 associated with each system entity. Included within each monitoring options file of an entity may be list of monitoring functions available for use with that system entity. For example, a sensor for an external door may have a monitoring options file that identifies an associated card reader and a camera with a field of view the covers that door. Where the card reader is selected, the display may show images of authorized users that present an entry card to the card reader.

Similarly, where the entity is an operator of a POS terminal, the operator may have a monitoring options file that includes each of a number POS terminal that the operator could use. Similarly, the monitoring options file may identify a system file of transactions handled by the operator or an identifier of an exceptions file associated with that operator.

Returning now to the example, FIG. 2 shows an example where an entrance door with a card reader has been selected as the system entity. The first and second monitoring functions selected include the card reader and a camera capturing images. A menu selection above the time line of FIG. 2 shows that the cameras option based upon detected movement has been selected for the type of event to be displayed below the time line. Similarly, a menu selection below the time line shows that the card holder option has been selected for the event to be displayed above the time line. In this regard, selection of card holder results in the display of the image and name of the authorized user of each identification card presented to a card reader of the secured area. The selection of the camera covering the door of the card reader shows the actual user of the card.

FIG. 2 also indicates that a user may simply touch the display to zoom into a higher magnification of the events on the time line. The user may also place a cursor on the time line and move the displayed images of the magnified time line either forwards or backwards in time.

The display of card holders and images from interior cameras offers a great advantage in ensuring the proper usage of access cards. By juxtapositioning the image of an authorized card holder along with the image from a camera detecting movement inside a door opened by the access card as shown in FIG. 2, security personnel can verify that the person using the card was in fact the authorized person.

While the process of FIG. 2 can be very useful in detecting card misuse, it may be difficult to detect card misuse by a particular person. In this case, in addition to selecting the card holder option and door, the user may also enter the identifier of a particular card holder. In this case, the area below the time line of FIG. 2 may remain the same, but the area above the time line would only display only the image of the authorized user of the identified card.

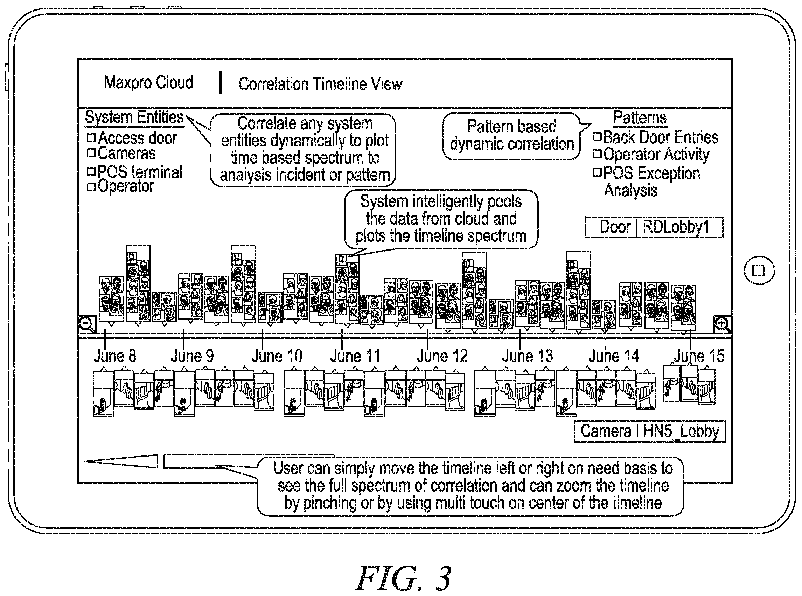

FIG. 3 depicts an expanded view of the screen 102 of the search function of FIG. 2. In the example of FIG. 3, the first event selected was the card reader controlling the opening of a door (RDLobby1) into a lobby of the secured area and associated images. The second event selected is the detection of motion by a camera (HN5_Lobby) inside the lobby. The time interval selected was between June 8 and June 15 of a particular year.

FIG. 3 also shows a set of optional menu functions for displaying the time line, in general, including system entities and patterns that may be used in conjunction with the search function to detect and analyze events. In this regard, the system entries that may be selected may include access doors, cameras, POS terminals or operators. Similarly, the patterns may include back door entries, operator activity and POS exception analysis.

As shown, the search function downloads events associated with each of the identified type of events of the search and plots those events on the time line. The user can also place a cursor over a time line control (shown below the time line) to move the time line backwards and forwards in time.

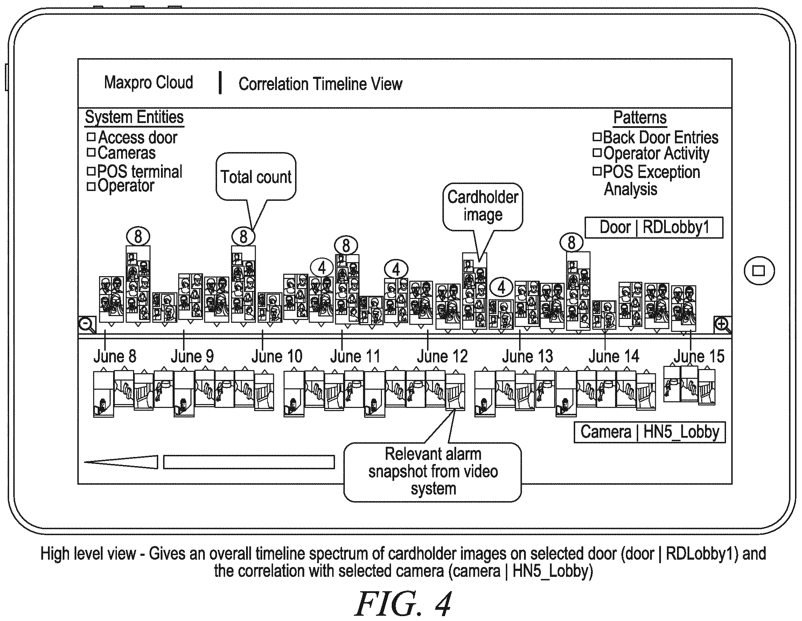

FIG. 4 is similar to FIG. 3 and shows a high level view of search results. In this regard, the top portion shows card holder images and the number of card holder images per time period. The bottom view shows relevant images based upon the detection of motion from a nearby video camera. The total count of events during each time period is shown as a number within a window associated (e.g., above) the events.

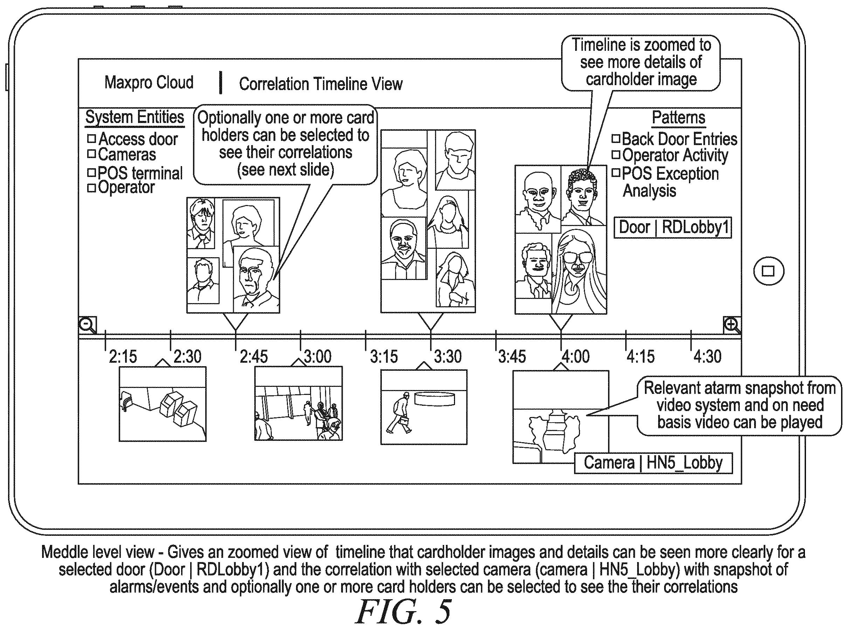

FIG. 5 is an expanded view of FIGs. 3 and 4 obtained by activating the zoom function. FIG. 5 shows the authorized users and motion detected images in more detail.

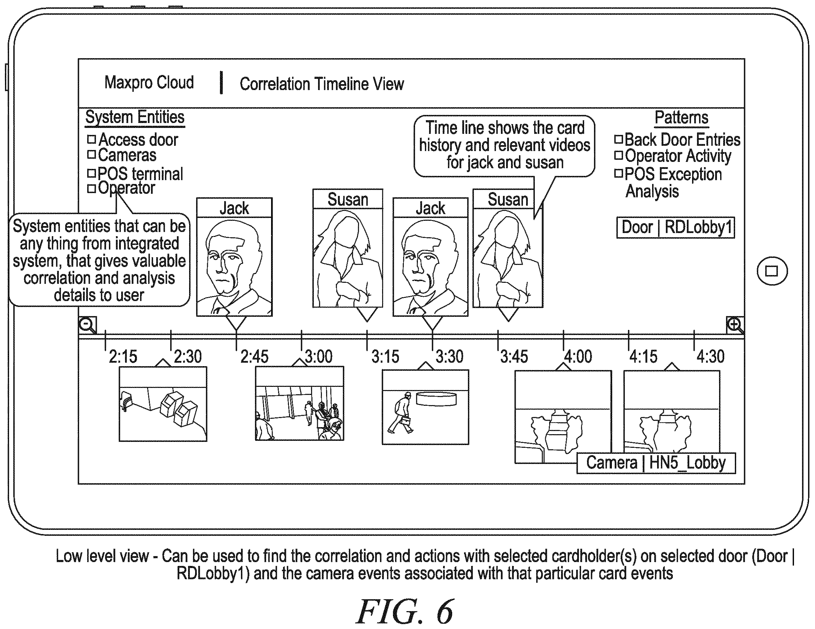

FIG. 6 is a further expanded view of FIGs. 3-5. As can be seen in FIG. 6, the expanded view can be used to further view the access history of specific authorized users. To gain further insight as to the use by a single card holder, a user of the system may simply select one of the images (card holders) shown in FIGs. 3-6 by clicking on the image and only images of the selected card holder would be shown during the time period of that time line.

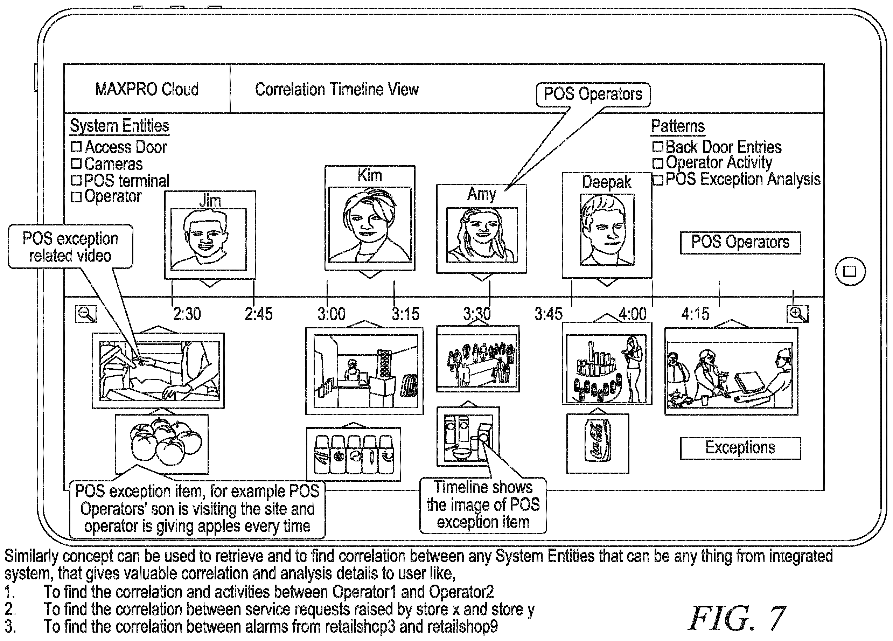

FIG. 7 shows another, different, example. In FIG. 7, the system entity selected is a POS terminal. The pattern option selected is POS exception analysis. In FIG. 7, the area above the time line shows POS terminal operators and the time that the operator signed into an associated POS terminal. The area below the time line shows POS exceptions detected by the system. In this case, POS exceptions represent potential inconsistencies with normal system operation. Examples include voided sales, returns, transfer of objects past the POS terminal without detecting a POS transaction, etc.

In general, the search pattern of FIG. 7 can be used to correlate activities between two POS terminal operators. For example, one operator enters the sale of an item to a second operator. The second operator enters the return of the item and where the second operator removes cash from the POS terminal and the operators split the removed cash.

Alternatively, the search pattern of FIG. 7 may be used in the context of an owner with many store locations to correlate service requests between store x and store y. For example, one store may accept more returns than another and the correlations may be used to detect and understand the reasons for the difference.

Similarly, the search pattern of FIG. 7 may be used to detect correlations between alarms from different stores. In this case, the source and type of alarm may be correlated to specific locations.

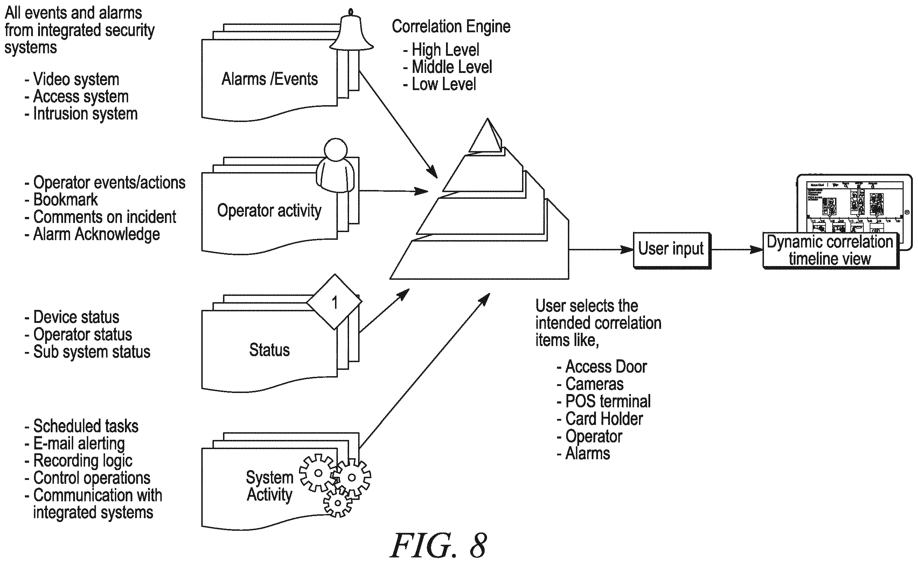

FIG. 8 depicts the overall information flow that may be associated with the search system. Under one particular illustrated embodiment, sensors, cameras, POS terminals and card readers may independently save transaction data to respective files within the cloud device and images may be later correlated by the processors of a correlation engine. For example, a sensor (e.g., a door switch) may save activation information into a file of the cloud device. The file may simply contain an identifier of the sensor and a time of activation of the sensor. The authorized user may enter information regarding nearby cameras that allows a correlation processor of the correlation engine to correlate activation of a door switch with images from a nearby camera with a field of view the includes the door.

Similarly, the authorized user may enter information regarding POS events and actions. For example, the user may enter information regarding authorizations of each operator. For example, some operators may be allowed to accept returns while other operators are not authorized. An operator who accepts a return even though not authorized may cause an exception processor (or the correlation processor) to generate an exception. Similarly, the authorized user may bookmark certain operators or types of events that will be displayed upon selecting the operator activity option for detected activity. Bookmarking may be accomplished by saving one or more keywords (or symbols) in an event type field of the cloud file and the system entity identifier of the device or person. The keywords and identifiers provide a cross-reference between the person or device and the bookmarked event.

Similarly, an investigator may investigate a security event (e.g., a break-in) associated with a particular location and enter comments into a file that describes the event. The authorized user may bookmark the comments by linking the comments to a particular sensor or camera. The authorized user may also link certain sensor, cameras, POSs and card readers together via bookmarking based upon his/her knowledge of the alarm system.

The authorized user may also enter information regarding device, operator or subsystem status. For example, during non-store hours, the user may program a time processor to bookmark any operator activity for display on a time line.

Similarly, the authorized user may bookmark (or cause the appropriate processor to bookmark) scheduled tasks for reporting or non-reporting on the time line. The bookmarking may be performed based on whether they were performed or not performed according to the type of task involved.

The system may also include programs that automatically send e-mail alerts to the user. In this case, the logic of the programs may be based upon the concurrence or predefined time relationship of two or more events.

Similarly, the system may also include programming that records events automatically. This again is based upon two or more events that occur concurrently or within some predefined time period.

In addition, the authorized user may specify control operations that are performed by the system. As above, the control operations may be based upon the concurrence of relationship of two or more events. Communications among integrated systems may be based upon the same concept.

The search system provides the authorized user with a novel simplified human-factors based interface with a time line that can be operated in two swipes (single hand/click operation based upon the two information factors), the results of which are, in turn, presented on the top and bottom of the time line. This allows correlation of different entities like access card, associated video, etc. The correlation of events may occur and be presented dynamically.

In the integrated system of FIG. 1, many critical events may be happening at any one instant and operators of conventional systems may see each of these events only in an isolated way. In contrast, the search function described herein pulls these events together and gives more insight about the incident for better incident analysis.

Use of the search function allows correlation between two unrelated events/entities that may disclose hidden patterns or anomalies. In one use case, POS transactions may be compared with operator activity. When POS transactions are correlated with operator activity, the comparison may expose a pattern for a particular operator that is clearly improper. While the comparison of transaction exceptions (based upon voided sales) with operator activity are believed to be of great importance, the correlation of operator activity with any POS transaction may only be slightly less important.

In another case, comparing card holder use history with relevant alarms (based upon motion detection) is also important. This plotting of images based upon card use may help to see if card holder activity is improper by comparing such use against video from other cameras. This comparison may give direct insight in the case of stolen access cards by correlating card holder use images against motion detection images. Also, two unrelated card holders can be presented on the timeline to understand their pattern of activity in case of an incident.

In other cases, the correlation of images may be used in conjunction with back door activity or with activity at some other little-used entrance. In the case of a retail store, the back door activity of any one door can be compared with some other door to give insight about suspicious activity for specific periods when back door activity shows significant deviation from normal activity.

In general, conventional systems require more time to understand event details during normal operation and during investigations. Current alarm and incident management applications are unable to correlate specific data from multiple sources with time line information. Current systems only give static reports. Current systems only present predefined relationships among entities. They can't dynamically correlate any two different or same type entities. Current views are tabular and do not give insight or highlight patterns or anomalies.

The search system is simple and the interactive user interface provides correlation information of any two selected system entities. It saves a great deal of time during investigations and forensic analysis.

The search system minimizes human errors/misses by providing a dynamic correlation time line view of selected entities during particular time periods. The solution is an improvement considering the human factor needs of operators/investigators. The search feature avoids the conventional way of reviewing history, events, alarms and video clips in isolation as is normally done in integrated security systems.

In addition, the search system is not limited only to playback or retrieval modes. Instead, it can be used during live operation as well, for example, to add events and updates to the time line in real time. Selected time line details, correlation results can be exported or stored as clips or filtered and saved as results for later retrieval. Users can simply move the time line left or right, as needed, to see the full spectrum of correlation and can zoom into or out of image detail by pinching or by using a multi-touch process on the center of the time line.

In general, the system incorporates a cloud server saving a plurality of security events that occurred within a secured area where each saved security event includes an identifier on a device or person monitored by the security system, an identifier of the monitoring function that triggered the saving of the event in the cloud and a time of the event, a user input receiving an identifier of the monitored device or person and at least two different functions monitored by the security system and a processor downloading information of some of the plurality of saved events identified by the received identifiers from the cloud server and presenting the downloaded information of each event at corresponding locations along a timeline with a first area along the timeline reserved for information of events associated with a first of the at least two different functions and a second area reserved for information of events associated with a second of the at least two different functions.

From the foregoing, it will be observed that numerous variations and modifications may be effected without departing from the scope hereof. It is to be understood that no limitation with respect to the specific apparatus illustrated herein is intended or should be inferred. It is, of course, intended to cover by the appended claims all such modifications as fall within the scope of the claims.

## Claims

1. A method comprising:
a cloud server (28) saving a plurality of security events that occurred within a secured area (22) where each saved security event includes an identifier on a device or person monitored by the security system (10), an identifier of the monitoring function that triggered the saving of the event in the cloud and a time of the event;
a user input receiving an identifier of a monitored device or person and an identifier for each of at least two different functions associated with the received identifier and that are monitored by the security system;
a processor (48) downloading information of some of the plurality of saved events identified by the received identifiers from the cloud server and presenting the downloaded information of each event at corresponding locations along a timeline with a first area along the timeline reserved for information of events associated with a first of the at least two different functions and a second area reserved for information of events associated with a second of the at least two different functions; and
wherein the first of the two different functions comprises reading an identity card of the person and presenting a retrieved image of an authorized user of the identity card in the first area along the timeline.

2. The method as in claim 1 wherein the information presented along the timeline further comprises one or more of a CCTV operator, an image of a POS terminal operator, an image of an item purchased through a POS operator, a cardholder image or cardholder details or both of a card read by a card reader (26), a snapshot image of alarm video from a CCTV camera or video played directly on the time line in response to a cursor clicking on an event/alarm of the time line.

3. The method as in claim 1 wherein a second of the two different functions further comprises recording images of a person that used the identity card proximate a door (24) controlled by the card reader (26).

4. The method as in claim 1 wherein the first of the two different functions further comprises detecting an identity of an operator of a point of sale terminal (38).

5. The method as in claim 4 wherein the information presented in the first area further comprises an image of the operator of the point of sale terminal (38).

6. The method as in claim 5 wherein a second of the two different functions further comprises displaying transaction data from the point of sale terminal (38).

7. The method as in claim 5 wherein a second of the two different functions further comprises displaying exception data from the point of sale terminal (38).

8. An apparatus comprising:
a cloud server (28) that saves a plurality of security events that occurred within a secured area (22) where each saved security event includes an identifier on a device or person monitored by the security system (10), an identifier of the monitoring function that triggered the saving of the event in the cloud and a time of the event;
a user input that receives an identifier of a monitored device or person and an identifier for each of at least two different functions associated with the received identifier and that are monitored by the security system;
a processor (48) that downloads information of some of the plurality of saved events identified by the received identifiers from the cloud server and that presents the downloaded information of each event at corresponding locations along a timeline with a first area along the timeline reserved for information of events associated with a first of the at least two different functions and a second area reserved for information of events associated with a second of the at least two different functions; and
wherein the first of the two different functions comprises reading an identity card of the person and presenting a retrieved image of an authorized user of the identity card in the first area along the timeline.

9. The apparatus as in claim 8 wherein a card reader (26) reads the identity card of the person.

10. The apparatus as in claim 9 wherein a camera records images of the person that used the identity card proximate a door (24) controlled by the card reader (26), and the second of the two of more different functions includes presenting the recorded images of the person in the second area.

11. The apparatus as in claim 8 wherein the first of the two different functions further comprises an image capture device for capturing an image of an operator of a point of sale terminal (38).

12. The apparatus as in claim 11 wherein the information presented in the first area further comprises the image of the operator of the point of sale terminal (38).

13. The apparatus as in claim 12 wherein a second of the two different functions further comprises collection of transaction data from the point of sale terminal (38).

## Patentansprüche

1. Verfahren, das Folgendes umfasst:
einen Cloud-Server (28), der mehrere Sicherheitsereignisse speichert, die innerhalb eines gesicherten Bereichs (22) aufgetreten sind, wobei jedes gespeicherte Sicherheitsereignis eine Kennung einer Vorrichtung oder einer Person, die durch das Sicherheitssystem (10) überwacht wird, eine Kennung der Überwachungsfunktion, die das Speichern des Ereignisses in der Cloud ausgelöst hat, und eine Zeit des Ereignisses enthält;
einen Anwendereingang, der eine Kennung einer überwachten Vorrichtung oder Person und eine Kennung für jede von mindestens zwei verschiedenen Funktionen, die der empfangenen Kennung zugeordnet sind und die durch das Sicherheitssystem überwacht werden, empfängt;
einen Prozessor (48), der Informationen einiger der mehreren gespeicherten Ereignisse, die durch die empfangenen Kennungen identifiziert werden, von dem Cloud-Server, herunterlädt und die heruntergeladenen Informationen jedes Ereignisses an entsprechenden Orten entlang einer Zeitlinie darstellt, wobei ein erster Bereich entlang der Zeitlinie für Informationen von Ereignissen reserviert ist, die einer ersten der mindestens zwei verschiedenen Funktionen zugeordnet sind, und ein zweiter Bereich für Informationen von Ereignissen reserviert ist, die einer zweiten der mindestens zwei verschiedenen Funktionen zugeordnet sind; und
wobei die erste der zwei verschiedenen Funktionen umfasst, eine Identitätskarte der Person zu lesen und ein erfasstes Bild eines autorisierten Anwenders der Identitätskarte in dem ersten Bereich entlang der Zeitlinie darzustellen.

2. Verfahren nach Anspruch 1, wobei die Informationen, die entlang der Zeitlinie dargestellt werden, eine CCTV-Bedienungsperson und/oder ein Bild einer POS-Endgerät-Bedienungsperson und/oder ein Bild eines durch eine POS-Bedienungsperson gekauften Objekts und/oder ein Bild eines Karteninhabers oder Details des Karteninhabers oder beides einer durch ein Kartenlesegerät (26) gelesenen Karte und/oder ein Momentaufnahmenbild eines Alarmvideos von einer CCTV-Kamera und/oder ein Video, das als Reaktion darauf, dass ein Cursor auf ein Ereignis/einen Alarm der Zeitlinie klickt, unmittelbar auf der Zeitlinie abgespielt wird, umfassen.

3. Verfahren nach Anspruch 1, wobei eine zweite der zwei verschiedenen Funktionen ferner Aufzeichnungsbilder einer Person umfasst, die die Identitätskarte in der Nähe einer Tür (24), die durch das Kartenlesegerät (26) gesteuert wird, verwendet hat.

4. Verfahren nach Anspruch 1, wobei die erste der zwei verschiedenen Funktionen ferner umfasst, eine Identität einer Bedienungsperson eines Verkaufsort-Endgeräts (38) zu detektieren.

5. Verfahren nach Anspruch 4, wobei die Informationen, die in dem ersten Bereich dargestellt werden, ferner ein Bild der Bedienungsperson des Verkaufsort-Endgeräts (38) umfassen.

6. Verfahren nach Anspruch 5, wobei eine zweite der zwei verschiedenen Funktionen ferner umfasst, Transaktionsdaten von dem Verkaufsort-Endgerät (38) anzuzeigen.

7. Verfahren nach Anspruch 5, wobei eine zweite der zwei verschiedenen Funktionen ferner umfasst, Ausnahmedaten von dem Verkaufsort-Endgerät (38) anzuzeigen.

8. Vorrichtung, die Folgendes umfasst:
einen Cloud-Server (28), der mehrere Sicherheitsereignisse speichert, die innerhalb eines gesicherten Bereichs (22) aufgetreten sind, wobei jedes gespeicherte Sicherheitsereignis eine Kennung einer Vorrichtung oder einer Person, die durch das Sicherheitssystem (10) überwacht wird, eine Kennung der Überwachungsfunktion, die das Speichern des Ereignisses in der Cloud ausgelöst hat, und eine Zeit des Ereignisses enthält;
einen Anwendereingang, der eine Kennung einer überwachten Vorrichtung oder Person und eine Kennung für jede von mindestens zwei verschiedenen Funktionen, die der empfangenen Kennung zugeordnet sind und die durch das Sicherheitssystem überwacht werden, empfängt;
einen Prozessor (48), der Informationen einiger der mehreren gespeicherten Ereignisse, die durch die empfangenen Kennungen identifiziert werden, von dem Cloud-Server herunterlädt und der die heruntergeladenen Informationen jedes Ereignisses an entsprechenden Orten entlang einer Zeitlinie darstellt, wobei ein erster Bereich entlang der Zeitlinie für Informationen von Ereignissen reserviert ist, die einer ersten der mindestens zwei verschiedenen Funktionen zugeordnet ist, und ein zweiter Bereich für Informationen von Ereignissen reserviert ist, die einer zweiten der mindestens zwei verschiedenen Funktionen zugeordnet sind; und
wobei die erste der zwei verschiedenen Funktionen umfasst, eine Identitätskarte der Person zu lesen und ein erfasstes Bild eines autorisierten Anwenders der Identitätskarte in dem ersten Bereich entlang der Zeitlinie darzustellen.

9. Vorrichtung nach Anspruch 8, wobei ein Kartenlesegerät (26) die Identitätskarte der Person liest.

10. Vorrichtung nach Anspruch 9, wobei eine Kamera Bilder der Person aufzeichnet, die die Identitätskarte in der Nähe einer Tür (24) verwendet hat, die durch das Kartenlesegerät (26) gesteuert wird, und die zweite der zwei oder mehr verschiedenen Funktionen enthält, die aufgezeichneten Bilder der Person in dem zweiten Bereich darzustellen.

11. Vorrichtung nach Anspruch 8, wobei die erste der zwei verschiedenen Funktionen ferner eine Bildaufnahmevorrichtung zum Aufnehmen eines Bildes einer Bedienungsperson eines Verkaufsort-Endgeräts (38) umfasst.

12. Vorrichtung nach Anspruch 11, wobei die in dem ersten Bereich dargestellten Informationen ferner das Bild der Bedienungsperson des Verkaufsort-Endgeräts (38) umfassen.

13. Vorrichtung nach Anspruch 12, wobei eine zweite der zwei verschiedenen Funktionen ferner ein Sammeln von Transaktionsdaten von dem Verkaufsort-Endgerät (38) umfasst.

## Revendications

1. Procédé, comprenant :
la sauvegarde, par un serveur en nuage (28), d'une pluralité d'événements de sécurité qui sont survenus au sein d'une zone sécurisée (22), chaque événement de sécurité sauvegardé comportant un identifiant sur un dispositif ou une personne surveillés par le système de sécurité (10), un identifiant de la fonction de surveillance qui a déclenché la sauvegarde de l'événement dans le nuage et une heure de l'événement ;
la réception, par une entrée utilisateur, d'un identifiant d'un dispositif ou d'une personne surveillés et d'un identifiant pour chacune d'au moins deux fonctions différentes associées à l'identifiant reçu et qui sont surveillées par le système de sécurité ;
le téléchargement, par un processeur (48) à partir du serveur en nuage, d'informations de certains de la pluralité d'événements sauvegardés identifiés par les identifiants reçus et la présentation, par le processeur (48), des informations téléchargées de chaque événement à des emplacements correspondants le long d'une ligne chronologique, une première zone le long de la ligne chronologique étant réservée à des informations d'événements associés à une première des au moins deux fonctions différentes et une deuxième zone étant réservée à des informations d'événements associés à une deuxième des au moins deux fonctions différentes ; et
la première des au moins deux fonctions différentes comprenant la lecture d'une carte d'identité de la personne et la présentation d'une image extraite d'un utilisateur autorisé de la carte d'identité dans la première zone le long de la ligne chronologique.

2. Procédé selon la revendication 1, dans lequel les informations présentées le long de la ligne chronologique comprennent en outre un ou plusieurs éléments dans le groupe constitué par un opérateur CCTV, une image d'un opérateur de terminal POS, une image d'un article acheté par l'intermédiaire d'un opérateur POS, une image de détenteur de carte et/ou des coordonnées de détenteur de carte relatives à une carte lue par un lecteur de carte (26), une image instantanée d'une vidéo d'alarme provenant d'une caméra CCTV ou une vidéo diffusée directement sur la ligne chronologique en réponse au clic d'un curseur sur un événement/une alarme de la ligne chronologique.

3. Procédé selon la revendication 1, dans lequel une deuxième des deux fonctions différentes comprend en outre l'enregistrement d'images d'une personne ayant utilisé la carte d'identité à proximité d'une porte (24) commandée par le lecteur de carte (26).

4. Procédé selon la revendication 1, dans lequel la première des deux fonctions différentes comprend en outre la détection d'une identité d'un opérateur d'un terminal de point de vente (38).

5. Procédé selon la revendication 4, dans lequel les informations présentées dans la première zone comprennent en outre une image de l'opérateur du terminal de point de vente (38).

6. Procédé selon la revendication 5, dans lequel une deuxième des deux fonctions différentes comprend en outre l'affichage de données de transaction provenant du terminal de point de vente (38).

7. Procédé selon la revendication 5, dans lequel une deuxième des deux fonctions différentes comprend en outre l'affichage de données d'exception provenant du terminal de point de vente (38).

8. Appareil, comprenant :
un serveur en nuage (28) qui sauvegarde une pluralité d'événements de sécurité qui sont survenus au sein d'une zone sécurisée (22), chaque événement de sécurité sauvegardé comportant un identifiant sur un dispositif ou une personne surveillés par le système de sécurité (10), un identifiant de la fonction de surveillance qui a déclenché la sauvegarde de l'événement dans le nuage et une heure de l'événement ;
une entrée utilisateur qui reçoit un identifiant d'un dispositif ou d'une personne surveillés et un identifiant pour chacune d'au moins deux fonctions différentes associées à l'identifiant reçu et qui sont surveillées par le système de sécurité ;
un processeur (48) qui télécharge, à partir du serveur en nuage, des informations de certains de la pluralité d'événements sauvegardés identifiés par les identifiants reçus et qui présente les informations téléchargées de chaque événement à des emplacements correspondants le long d'une ligne chronologique, une première zone le long de la ligne chronologique étant réservée à des informations d'événements associés à une première des au moins deux fonctions différentes et une deuxième zone étant réservée à des informations d'événements associés à une deuxième des au moins deux fonctions différentes ; et
la première des au moins deux fonctions différentes comprenant la lecture d'une carte d'identité de la personne et la présentation d'une image extraite d'un utilisateur autorisé de la carte d'identité dans la première zone le long de la ligne chronologique.

9. Appareil selon la revendication 8, dans lequel un lecteur de carte (26) lit la carte d'identité de la personne.

10. Appareil selon la revendication 9, dans lequel une caméra enregistre des images de la personne ayant utilisé la carte d'identité à proximité d'une porte (24) commandée par le lecteur de carte (26), et la deuxième des au moins deux fonctions différentes comporte la présentation des images enregistrées de la personne dans la deuxième zone.

11. Appareil selon la revendication 8, dans lequel la première des deux fonctions différentes comprend en outre un dispositif de capture d'image permettant la capture d'une image d'un opérateur d'un terminal de point de vente (38).

12. Appareil selon la revendication 11, dans lequel les informations présentées dans la première zone comprennent en outre l'image de l'opérateur du terminal de point de vente (38).

13. Appareil selon la revendication 12, dans lequel une deuxième des deux fonctions différentes comprend en outre la collecte de données de transaction auprès du terminal de point de vente (38).
